# EUROPÄISCHE PATENTSCHRIFT

(11) **EP 1 905 147 B1**
(45) Veröffentlichungstag und Bekanntmachung des Hinweises auf die Patenterteilung: **29.08.2012**
(21) Anmeldenummer: 06777672.4
(22) Anmeldetag: 10.07.2006
(51) Int. Cl.: H02K 7/116

(54) **GETRIEBEMOTOR**
GEARED MOTOR
ELECTROREDUCTEUR

(30) Priorität: 20.07.2005 DE 202005011632 U
(43) Veröffentlichungstag der Anmeldung: 02.04.2008
(73) Patentinhaber: DewertOkin GmbH, 32278 Kirchlengern (DE)
(72) Erfinder: ROITHER, Andreas, 32130 Enger (DE)
(74) Vertreter: Dantz, Jan Henning
(86) Internationale Anmeldenummer: PCT/EP2006/064064
(87) Internationale Veröffentlichungsnummer: WO 2007/009900

(56) Entgegenhaltungen:
- EP-A- 1 400 726
- DE-A1- 10 329 097
- DE-A1- 19 729 282
- DE-U1- 29 606 367
- US-A1- 2003 155 824

## Beschreibung

Die Erfindung betrifft einen Getriebemotor, insbesondere zum Antrieb einer damit antriebstechnisch gekoppelten Verstelleinrichtung für Möbelbauteile, bestehend aus einem Antriebsmotor, mindestens einer aus Getriebebauteilen gebildeten Getriebestufe zur Reduzierung der Motordrehzahl und mit einem ein- oder mehrteiligen Gehäuse.

Der in Rede stehende Getriebemotor ist als Kleinstantrieb zu sehen, da die Leistung deutlich unter 1 kW liegt. In bevorzugter Ausführung wird der Getriebemotor genutzt, um eine Verstelleinrichtung für Möbel, beispielsweise ein Lattenrost, ein Bett oder Teiles eines Bettes oder einen Sessel zu verstellen. Üblicherweise sind derartige Getriebemotoren mit einer Getriebestufe ausgestattet. Diese Getriebestufe besteht aus einer von dem Antriebsmotor antreibbaren Schnecke und einem damit kämmenden Schneckenrad. Dieses Schneckenrad dient dann als Antriebselement für einen Antriebszug. Dieser Antriebszug kann aus einer von dem Schneckenrad antreibbaren Spindel und einer darauf aufgesetzten, gegen Drehung gesicherten Spindelmutter bestehen. Das Antriebsrad könnte jedoch auch eine Innengewindebohrung aufweisen, in die eine Spindel eingesetzt ist. Die Spindel könnte gegen Drehung gesichert sein, so dass der gesamte Getriebemotor einschließlich der Getriebestufe auf der Spindel verfährt. Derartige Antriebe werden als Linearantriebe bezeichnet. Es ist jedoch auch möglich, dass das Schneckenrad eine Welle antreibt, so dass der Antrieb ein Rotationsantrieb ist. Es ist jedoch auch möglich, dass dem Schneckenrad eine weitere Getriebestufe nachgeschaltet ist.

Die Antriebszüge sind bevorzugt so ausgelegt, dass der Antrieb selbsthemmend ist, das heißt, bei abgeschaltetem Antriebsmotor wird ein einwirkendes Lastmoment gehalten. Bei den in Rede stehenden Antrieben werden jedoch größerer Verstellgeschwindigkeiten und/oder größere Verstelllasten gefordert, die dazu führen, dass der Antriebszug nicht mehr selbsthemmend ist. Es werden dann in den Antriebszug Bremselemente integriert, die so ausgelegt sind, dass die einwirkende Last bei abgeschaltetem Antriebsmotor gehalten wird. Derartige Lösungen haben sich zwar bewährt, sie sind jedoch konstruktiv aufwendig und stehen der Forderung einer kompakten Bauweise entgegen. Die in Rede stehenden Antriebe bzw. Getriebemotoren sollten stets äußerst kompakt ausgelegt sein, da die Einbauräume relativ klein sind.

Die DE 103 29 097 offenbart eine lineare Stellvorrichtung mit einem Motor, der über ein Planetengetriebe und eine Kupplung eine Spindel antreibt. Um einen Kupplungsabschnitt ist eine Bremsfeder angeordnet, die für eine Bremswirkung aufgeweitete wird und für eine Reibung zwischen dem Außenumfang und der Innenfläche einer Hülse sorgt, so dass bei stillstehenden Motor die Spindel in der gewünschten Position fixiert wird.

Der Erfindung liegt die Aufgabe zugrunde, einen Getriebemotor zu schaffen, der konstruktiv einfach aufgebaut ist und der äußerst kompakt ist und an den unterschiedliche Antriebszüge angesetzt werden können, welche selbst nicht selbsthemmend sein können.

Die gestellte Aufgabe wird mit einem Getriebemotor mit den Merkmalen des Anspruches 1 gelöst.

Die Lastmomentsperre ist nunmehr in den Getriebemotor integriert, so dass der nachgeschaltete Antriebszug ausschließlich aus den vorhandenen Bauteilen gebildet ist. Erfindungsgemäß steht die Lastmomentsperre mit dem Abtriebsglied der ersten, dem Antriebsmotor nachgeschalteten Getriebestufe in Wirkverbindung. Die Lastmomentsperre ist als Federelement ausgebildet und ist als ein einstückiges sowie ringförmiges Federelement ausgebildet. Dadurch wird den Umständen Rechnung getragen, dass in den bevorzugten Ausführungsbeispielen das Abtriebsglied jeder Getriebestufe ein rotierendes Getriebebauteil ist.

Eine konstruktiv einfache Lösung auch im Hinblick auf die zu übertragenden Drehmomente ergibt sich, wenn das Bremselement als Federelement mit mehreren Windungen ausgebildet ist.

Das Federelement kann dann so ausgelegt sein, dass es in einer Drehrichtung des zugeordneten Abtriebsgliedes sich aufweitet und somit eine Bremskraft erzeugt. Es kann jedoch auch so ausgelegt sein, dass es sich in einer Drehrichtung des Abtriebsgliedes aufweitet und in der anderen Drehrichtung zusammenzieht. Dabei kann die Bremskraft vergrößert oder verringert werden.

Es ist ferner vorgesehen, dass an das Abtriebsglied der jeweiligen Getriebestufe ein zylindrischer Ansatz oder mindestens zwei auf einem Kreis liegende Stege angesetzt setzt oder angeformt sind, und dass auf den Ansatz oder auf die Stege das Federelement aufgesetzt ist oder abschnittsweise an dem Ansatz oder an den Stegen anliegt oder dass der Ansatz oder die Stege mit der Lastmomentsperre in einer Wirkverbindung stehen.

Bei vielen Ausführungsformen des in Rede stehenden Getriebemotors ist das Gehäuse aus einem Kunststoff gefertigt. Es ist deshalb in weiterer Ausgestaltung vorgesehen, dass das Bremselement bzw. das Federelement in einen Ring aus einem metallischen Werkstoff eingesetzt ist. Dieser Ring kann jedoch entfallen, wenn das Gehäuse aus Metall, beispielsweise aus Stahl besteht.

Gemäß einer anderen Ausführungsform ist vorgesehen, dass das Abtriebsglied der mit dem Bremselement ausgestatteten Getriebestufe drehfest mit einer Buchse verbunden ist, und dass auf die Buchse das Federelement aufgesetzt ist. Es ist ferner vorgesehen, dass beidseitig des Abtriebsgliedes jeweils ein Wälzlager im Gehäuse angeordnet ist. In weiterer Ausgestaltung ist vorgesehen, dass das den Motor und die Getriebebauteile aufnehmende Gehäuse einstückig ausgebildet ist. Es ist jedoch ebenfalls denkbar, dass das den Antriebsmotor aufnehmende Gehäuseteil und das die Getriebebauteile aufnehmende Gehäuseteil miteinander verschraubt sind.

In einer weiteren Ausführungsform ist noch vorgesehen, dass zwischen dem Abtriebsglied der mit dem Bremselement ausgestatteten Getriebestufe oder einer folgenden Getriebestufe und dem nachgeschalteten Antriebsstrang eine schaltbare Kupplung angeordnet ist, beispielsweise eine Klauenkupplung. Dabei kann die Kupplung manuell und/oder elektrisch geschaltet werden und/oder sich selbsttätig schalten. Im zuletzt genannten Fall der selbsttätigen Schaltung sind die Klauen sägezahnartig ausgebildet, so dass nur in einer Drehrichtung die Kraft übertragen wird, so dass die Klauenkupplung als Freilauf wirkt. Je nach Gestaltung des Antriebszuges kann an das die Getriebebauteile aufnehmende Gehäuse ein Anschlussteil angesetzt oder angeformt sein. Dieses Anschlussteil wäre beispielsweise fest mit dem Gehäuse verbunden. Dadurch könnte dieses Gehäuse an einem anderen Gehäuseteil oder an einem Möbel angeflanscht sein.

Der in Rede stehende Getriebemotor kann als Antriebselement für die unterschiedlichsten Verstelleinrichtungen eingesetzt werden. Es ist deshalb noch in einer weiteren Ausgestaltung vorgesehen, dass der das Bremselement aufweisenden Getriebestufe ein Freilauf zugeordnet ist. Dieser Freilauf könnte wiederum als Federelement ausgebildet sein. Dadurch wäre es möglich, dass beispielsweise das Absenken eines angeschlossenen Bauteils bei ausgeschaltetem Antriebsmotor erfolgen kann.

Unabhängig von der jeweiligen Gestaltung des Getriebemotors ist der Antrieb so ausgelegt, dass sämtliche Kräfte über das Gehäuse abgetragen werden.

Das Gehäuse des Getriebemotors besteht aus mindestens einem Formteil. Dabei können mehrere Formteile miteinander verbunden werden, so dass das Getriebegehäuse als ein geschlossenes Gehäuse ausgebildet ist. Dabei können die Stoßflächen des Gehäuses mit Dichtelementen versehen sein, um beispielsweise ein Eindringen von Flüssigkeiten und Festkörpern in das Gehäuseinnere zu vermeiden. In einer weiteren Ausführungsform besteht das Getriebegehäuse aus mindestens einer stegartigen, offenen Struktur, wobei mehrere Strukturen gitterförmig aufgebaut und zusammengesetzt sein können. Bei dieser Ausführung kann die Abdichtung der Gehäuseteile entfallen, da um das Getriebegehäuse ein weiteres Gehäuse gestülpt ist, um das Getriebe und die Getriebebauteile gegen Schmutz und Feuchtigkeit zu schützen.

In Abhängigkeit von dem jeweiligen Verwendungsfall des Getriebemotors ist das Gehäuse des Getriebemotors mit Ansätzen und/oder Ausnehmungen versehen, um einen weiteren Antriebsstrang an dem Getriebemotor festzulegen und/oder um den Getriebemotor an oder in einem Möbel oder an oder in einem ersten Möbelbauteil zu befestigen.
Dabei ist der an dem Getriebegehäuse angesetzte Antriebsstrang in bevorzugter Weise durch einen Spindeltrieb gebildet, der mindestens aus einer Gewindespindel, einer darauf aufgesetzte Spindelmutter und einem damit in Wirkverbindung stehendes Möbelbauteil gebildet ist. Dabei werden durch den Getriebemotor das erste und das zweite Möbelbauteil relativ zueinander bewegt. Erfindungsgemäß ist das Abtriebsglied des Getriebemotors mit einer profilierten Innenbohrung versehen. Die profilierte Innenbohrung kann durch einen Innengewindeabschnitt und/oder durch ein Mehrkantprofil, beispielsweise in Form eines Innensechskantes, gebildet sein. In Weiterführung dieser Ausführungsform ist das Gehäuse des Getriebemotors mit mindestens einer Öffnung versehen, durch welche eine Gewindespindel oder eine Profilstange hindurchgeführt ist, welche mit der profilierten Innenbohrung des Abtriebsgliedes des Getriebemotors in Wirkverbindung steht.

Bei dem zuvor beschriebenen Getriebemotor ist das Gehäuse oder mindestens ein Gehäuseteil mit Ansätzen und/oder Ausnehmungen versehen. Dadurch können an das Getriebegehäuse Stege, Gabeln, Zapfen oder Ausnehmungen mit Querbohrungen angesetzt oder angeformt sein, um den Getriebemotor an oder in einem Möbel oder in einem Möbelbauteil festzulegen. Weiterhin können an das Getriebegehäuse oder an Teilen des Getriebegehäuses noch Bohrungen, Ausnehmungen, Taschen oder Zapfen angesetzt oder angeformt sein, um einen Antriebsstrang, beispielsweise in Form eines Gewindespindeltriebs an dem Getriebegehäuse zu befestigen.

Die eingangs erwähnte Lastmomentsperre ist durch einen Antriebskörper, einen Abtriebskörper, einen Bremskörper und einen Reibkörper gebildet. Dabei sind der Antriebskörper, der Abtriebskörper und der Bremskörper rotierend gelagert, während der Reibkörper fest mit dem Getriebegehäuse verbunden ist oder durch einen Abschnitt des Getriebegehäuses gebildet ist. In bevorzugter Ausführung ist der Antriebskörper durch ein Schneckenrad und der Bremskörper durch eine Bremsfeder, bestehend aus einem schraubenförmig gewundenen Drahtabschnitt mit abgewinkelten Drahtenden gebildet, während der Abtriebskörper mit einer Kupplung, einer Gewindespindel, einer Profilstange oder einem nachgeschalteten Rädergetriebe in Wirkverbindung steht. Dabei ist der Außendurchmesser des Bremskörpers etwas größer als der Innendurchmesser des Reibkörpers, so dass der Bremskörper unter einer Federvorspannung mit dem Reibkörper zusammensetzbar ist.
Der Antriebskörper und der Abtriebskörper weisen Klauen auf, die ineinandergreifen. Zwischen den Klauen ist umfangseitig ein Spiel vorgesehen, so dass sich der Antriebskörper und der Abtriebskörper um einen entsprechenden Winkel relativ zueinander bewegen können. Dabei stehen die Klauen mit den abgewinkelten Endabschnitten der Bremsfeder nach Art eines Mitnehmers in einer Wirkverbindung. Die Klauen des Antriebskörpers stehen unabhängig von der Drehrichtung mit ersten Flächen der angewinkelten Endabschnitte derart in Wirkverbindung, dass die eingangs beschriebene Federvorspannung reduziert wird.

Die Klauen des Abtriebskörpers stehen mit den zweiten Flächen der abgewinkelten Endabschnitte des Bremskörpers derart in Wirkverbindung, dass bei einer Rotation aus Richtung des dem Abtriebskörper nachgeschalteten Abtriebsgliedes eine Verstärkung der Federvorspannung erfolgt, so dass die Reibung zwischen dem Bremskörper und dem Reibkörper erhöht wird.

Die verwendeten Bauteile sind üblicherweise aus einem Kunststoff gefertigt. Eine weitere Ausführungsform sieht deshalb vor, dass die Klauen des Antriebskörpers. und/oder des Abtriebskörpers zumindest in dem Bereich des Kontaktes zu den ersten und/oder den zweiten Flächen der abgewinkelten Endabschnitte des Bremselementes in oder an die Klauen Einsätze aus einem Werkstoff höherer Festigkeit, beispielsweise Metalleinsätze, eingesetzt oder angesetzt sind.

Anhand der beiliegenden Zeichnungen wird die Erfindung noch näher erläutert. Es zeigen:
- Figur 1: einen Getriebemotor innerhalb eines Antriebszuges, der lineares Abtriebsglied aufweist;
- Figur 2: den Getriebemotor nach der Figur 1 in Schnittdarstellung, wobei die Schnittlinie durch das Abtriebsglied der Antriebsstufe verläuft;
- Figur 3: den Getriebemotor gemäß den Figuren 1 und 2 in sprengbildlicher Darstellung;
- Figur 4: eine Variante des Getriebemotors gemäß den Figuren 1 bis 3 mit einem Freilauf in sprengbildlicher Darstellung;
- Figur 5: eine mögliche Ausführung des Gehäuses des Getriebemotors;
- Figur 6: eine der Figur 5 entsprechende Darstellung, jedoch das die Getriebebauteile aufnehmende Gehäuse in Schnittdarstellung;
- Figur 7: eine der Figur 6 entsprechende Darstellung, jedoch im Vertikalschnitt;
- Figuren 8 -10: den Getriebemotor gemäß den Figuren 5 bis 7, bei dem eine Gewindespindel angetrieben wird und
- Figur 11: eine der Figur 7 entsprechende Darstellung, jedoch in einer Variante.

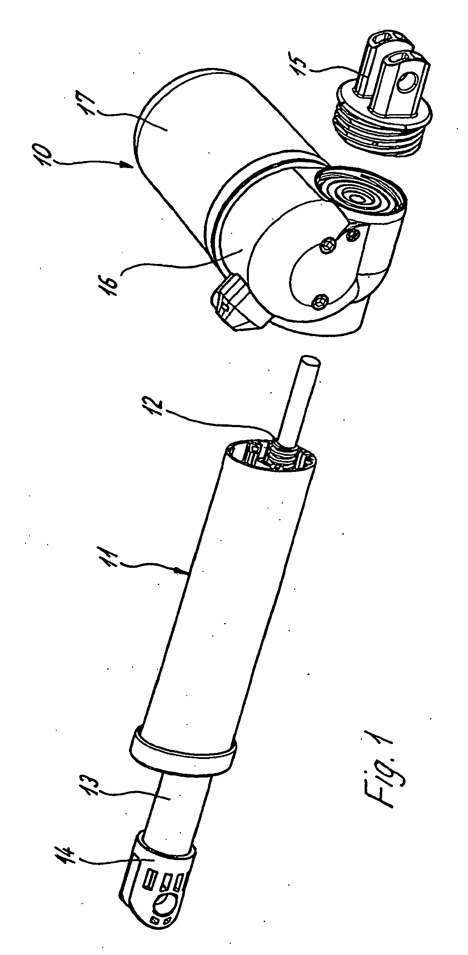

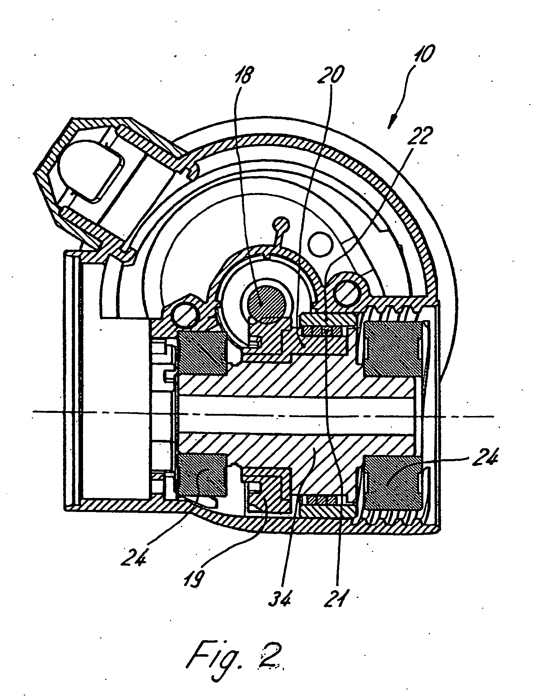

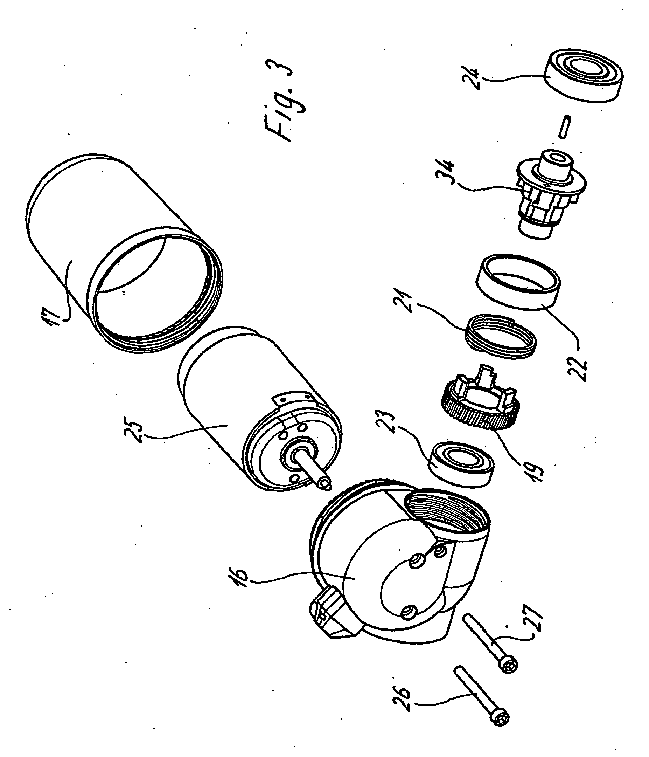

In der Figur 1 ist ein Getriebemotor 10 dargestellt, der noch anhand der Figuren 2 und 3 näher erläutert wird. Der Getriebemotor 10 ist zum Antrieb einer Lineareinheit 11 ausgelegt, die mit einer rotierend antreibbaren Spindel 12 ausgestattet ist. In nicht näher dargestellter Weise ist auf die Spindel 12 eine Spindelmutter aufgesetzt, die gegen Drehung gesichert ist und demzufolge je nach Drehrichtung der Spindel 12 in deren Längsrichtung verfahrbar ist. Mit der Spindelmutter ist ein Hubrohr 13 gekoppelt, welches über einen Gabelkopf 14 mit einem zu verstellenden Bauteil gekoppelt werden kann. Der Getriebemotor 10 ist mit einem weiteren Anschlussteil in Form eines Gabelkopfes 15 ausgestattet. Dieser Gabelkopf 15 trägt einen Gewindeansatz, der in ein entsprechendes Gegengewinde des Getriebemotors 10 eingeschraubt ist. Im dargestellten Ausführungsbeispiel ist der Gabelkopf 15 in den die Getriebebauteile aufnehmenden Gehäuseteil 16 eingeschraubt. Dieses Gehäuseteil 16 ist mit einem den Antriebsmotor aufnehmenden Gehäuseteil 17 beispielsweise durch Schrauben fest verbunden. Im Gegensatz zur dargestellten Ausführung könnte das Gehäuse zur Aufnahme des Antriebsmotors und zur Aufnahme der Getriebebauteile einstückig ausgebildet sein. Ferner könnte anstelle der Lineareinheit 11 an den Getriebemotor 10 ein rotierend antreibbares Bauteil angeschlossen sein, so dass beispielsweise eine Welle oder ein Profilstab angetrieben werden könnte.

Die Figur 2 zeigt eine mögliche Ausführungsform des Getriebes gemäß der Figur 1. Danach wird von dem Antriebsmotor eine Schnecke 18 angetrieben. Diese Schnecke 18 kämmt mit einem Schneckenrad 19, welches drehfest auf eine stufenförmig ausgebildete Buchse 20 aufgesetzt ist. In einer bevorzugten Ausführung können das Schneckenrad 19 und die Buchse 20 als einstückiges Formteil ausgebildet sein.

Das Getriebe ist außerdem mit einer Lastmomentsperre in Form einer Bremsfeder 21 ausgestattet, die aus mehreren Windungen besteht. Die Bremsfeder 21 ist in eine Buchse 22 eingesetzt und das Getriebe ist so ausgelegt, dass sich die Bremsfeder 21 bei einer an dem Gabelkopf 14 anliegenden Verstellkraft aufweitet und so eine Bremskraft erzeugt. Gemäß der Darstellung nach der Figur 2 ist im rechten Teil des Gehäuseteils 16 der Gabelkopf 15 eingeschraubt. Das Getriebe weist ferner einen Abtriebskörper 34 auf, der mit einer quer zur Schnecke 18 verlaufenden Bohrung versehen ist. In nicht näher dargestellter Weise kann in diese Bohrung die Bremsfeder 21 eingesetzt sein. Der Abtriebskörper 34 ist mittels zweier Wälzlager 23, 24 im Gehäuseteil 16 gelagert. Wie die Figuren 2 und 3 zeigen, ist die Bremsfeder 21 aus einem Drahtabschnitt mit einem viereckigen Querschnitt gebildet, so dass die entsprechenden Bremsflächen als vollflächig anzusehen sind. Dabei ist jedes Drahtende abgewinkelt.

In der Figur 3 ist der Getriebemotor 10 in Explosivdarstellung dargestellt. In dem Gehäuseteil 17 ist der Antriebsmotor 25 eingesetzt. Die Figur zeigt, dass der Motor 25 und das Gehäuseteil durch zwei Schrauben 26, 27 miteinander verbunden sind. Ferner zeigt die Figur, dass in das Getriebe ein Abtriebskörper 34 installiert ist, der in nicht näher dargestellter Weise mit der Spindel 12 verbunden ist.

Das Schneckenrad 19 ist mit drei Klauen ausgestattet, die in entsprechende Zwischenräume des Abtriebskörpers 34 eingreifen. Dadurch können sich diese besagten Teile relativ zueinander verdrehen. Wenn das Drehmoment vom Schneckenrad 19 eingeleitet wird, verringert sich die Federspannung, so dass die Bremsfeder 21 frei mitdrehen kann. Wird jedoch das Drehmoment vom Abtriebskörper 34 eingeleitet, weitet sich die Bremsfeder 21 auf, so dass die Bremswirkung gegeben ist.

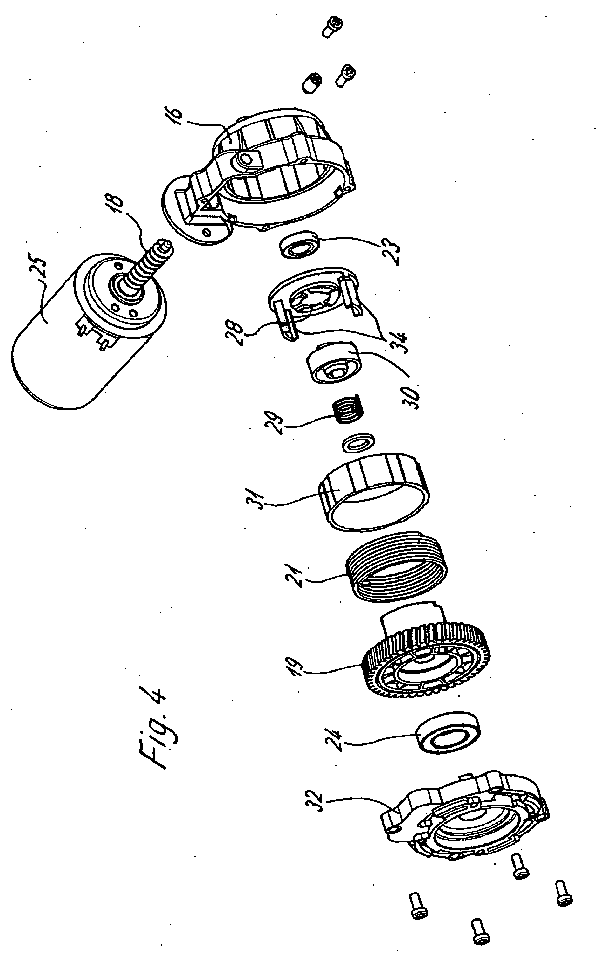

Die Figur 4 zeigt eine Ausführung, bei der das Getriebe nicht nur mit einer Lastmomentsperre in Form der Bremsfeder 21 ausgerüstet ist, sondern dass das Getriebe noch mit einem Freilauf ausgestattet ist, so dass eine Antriebsfunktion nur in einer Drehrichtung des Motors gegeben ist. Dazu ist der Antrieb noch mit einer weiteren Feder 29 und einem Freilaufring 30 ausgestattet. Die Klauen der Klauenkupplung 28 greifen in einen Profilring 31 ein, der am äußeren Umfang mit Längsnuten versehen ist. Innerhalb dieses Profilringes 31 liegt die Bremsfeder 21. Wie die Figur zeigt, ist das Gehäuseteil 16 durch zwei Schrauben mit dem Antriebsmotor 25 verschraubt. Das Gehäuseteil 16 ist mittels eines Anschlussteiles in Form eines Flansches 32 verschlossen. Mittels des Flansches 32 könnte die aus dem Antriebsmotor 25 und dem Getriebe bestehende Antriebseinheit an ein weiteres Gehäuse angeschlossen werden. Im Umkehrschluss dessen ist es jedoch auch möglich, dass ein weiteres Gehäuse oder eine Lineareinheit 11 an das Gehäuseteil 16 angesetzt ist.

In nicht näher dargestellter Weise kann die mit dem Getriebemotor ausgerüstete Antriebsanordnung mit einer schaltbaren Freilaufkupplung oder einer schaltbaren Klauenkupplung ausgerüstet werden. Es ist dann ein Betätigungsmittel vorgesehen, welches mit mindestens einem Teil der Klauenkupplung 28 oder mit mindestens einem Teil des Freilaufringes 30 in Wirkverbindung steht. Bei Betätigung des Betätigungsmittels geraten die Klauen außer Eingriff, so dass die antriebstechnische Verbindung zum Antriebsmotor 25 getrennt ist. Die Betätigung des Betätigungsmittels kann durch ein manuell betätigbares oder durch ein elektrisch angetriebenes Mittel erfolgen oder übertragen werden.

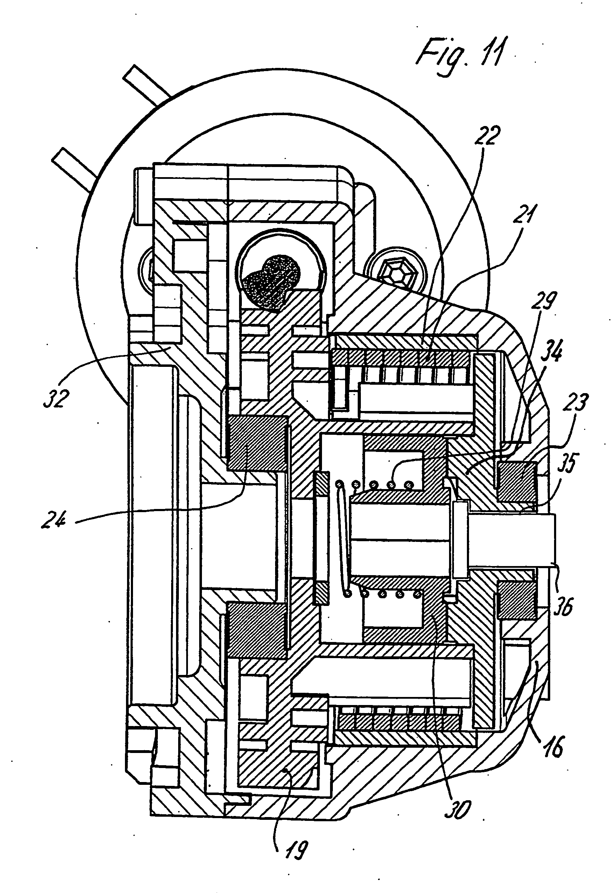

In einer besonders einfachen Ausführungsform ist gemäß der Figur 11 vorgesehen, dass das Betätigungsmittel ein Stift 36 ist, der in eine Bohrung 35 des Abtriebskörpers 34 und in einer Bohrung des Gehäuseteils 16 derart eingesetzt ist, dass er von der Außenseite des Gehäuseteiles 16 betätigbar ist. In bevorzugter Ausführung wird dieser Stift 36 durch eine Druckkraft betätigt. Die Bohrung 35 kann in der Drehachse des Abtriebskörpers 34 liegen. Der Durchmesser der Bohrung 35 kann ein klein wenig größer sein als der Außendurchmesser des Stiftes 36. In diesen Ringspalt kann dann ein allgemein bekanntes Dichtmittel eingesetzt werden.

Bei dem erfindungsgemäßen Getriebemotor 10 kann dieser als eine Verbundeinheit aus dem Antriebsmotor 25 und der Getriebestufe bzw. des Getriebes gesehen werden. Dabei können Teile der Motorlagerung oder des Motorgehäuses dem Getriebegehäuse 16 zugeordnet werden, von der Funktion her gesehen. Eine derartige Ausführung ist hinsichtlich der Montage und des Materialeinsatzes äußerst kostengünstig. Bei einer solchen Ausführung könnte man davon ausgehen, dass der Antriebsmotor 25 keine eigenständige Funktionseinheit mehr bildet.

Der Freilaufring 30 weist eine Profilbohrung auf und bildet das Abtriebsglied des Getriebes. Der Motor 25 und das Getriebe können ein nahezu gemeinsames Gehäuse bilden. Sinngemäß entsteht ein offener Motor ohne eine eigenständige Funktion. Das Lagerschild des Antriebsmotors könnte Teil des Gehäuses für das Getriebe sein.

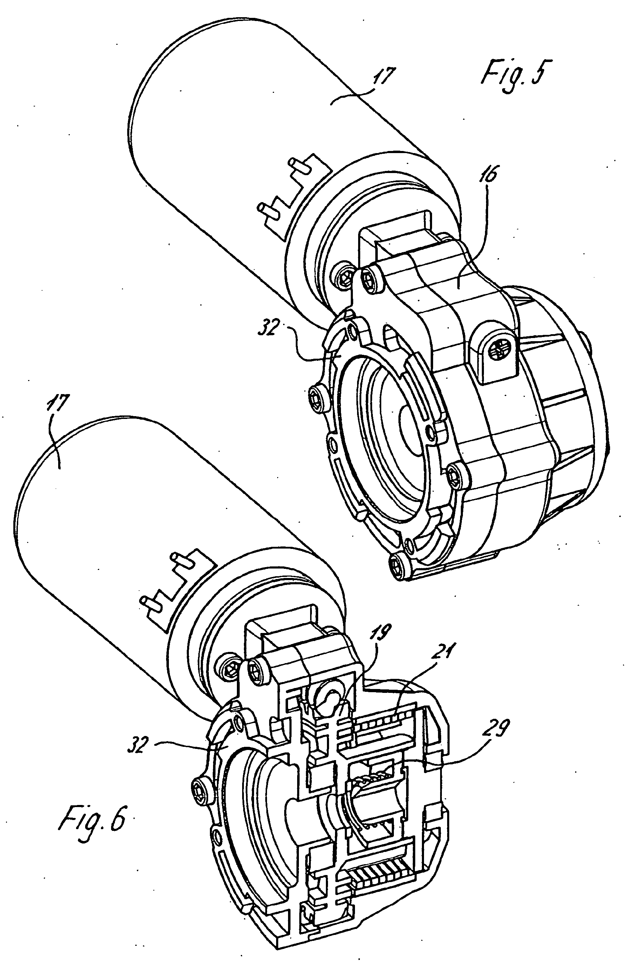

Die Figur 5 zeigt das Gehäuseteil 16 mit dem angeschraubten Gehäuseteil 17 für den Antriebsmotor.

Die Figur 6 zeigt das Schneckenrad 19 mit einem angesetzten Bund, über den die Bremsfeder 21 gelegt ist. Auch diese Anordnung ist mit einem Freilauf und einer inneren Feder 29 ausgestattet. Die Getriebestufe wird wiederum aus einer Schnecke und dem Schneckenrad 19 gebildet. In nicht näher dargestellter Weise könnte die Anordnung gemäß den Figuren 5 bis 6 als Rotationsantrieb genutzt werden, da das Schneckenrad eine Bohrung aufweist, in die ein Antriebselement fest eingesetzt werden könnte. Sofern dieses Antriebselement jedoch eine Spindel ist, ist die Antriebsanordnung ein Linearantrieb.

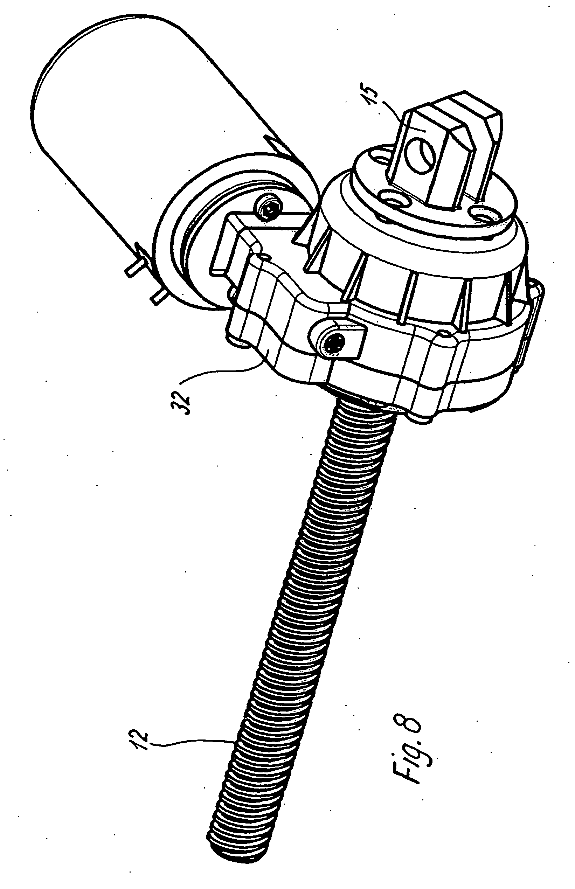

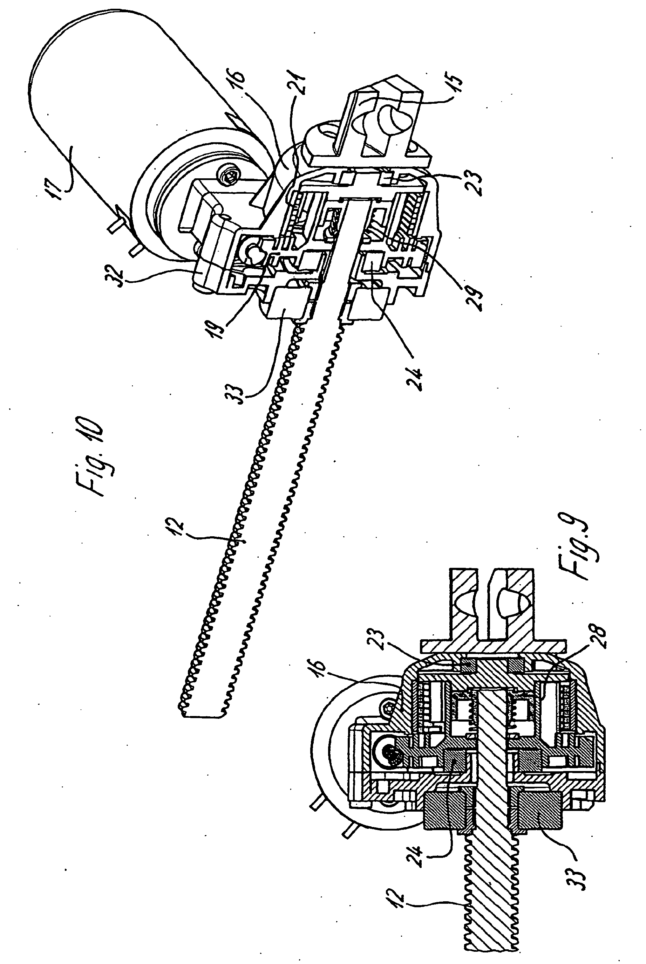

Die Figuren 8 bis 10 zeigen einen solchen Linearantrieb, bei dem das Schneckenrad 19 die Spindel 12 antreibt. Auch diese Anordnung ist mit einer Bremsfeder 21 und einer weiteren Feder 29 ausgestattet. Auch diese Anordnung ist mit einer Klauenkupplung 28 ausgestattet, so dass die Antriebsanordnung nur in einer bestimmten Drehrichtung des Antriebsmotors arbeitet. Die Spindel 12 ist in einem außen am Gehäuseteil 16 angesetzten Wälzlager 33 gelagert, das sinngemäß auch als Getriebewinkel bezeichnet werden könnte. In nicht dargestellter Weise ist auf die Spindel 12 eine Spindelmutter aufgesetzt, die gegen Drehung gesichert ist, so dass sie sich je nach Drehrichtung des Antriebsmotors in Längsrichtung der Spindel 12 verschiebt. Die Spindelmutter bildet das Antriebsglied der Antriebsanordnung.

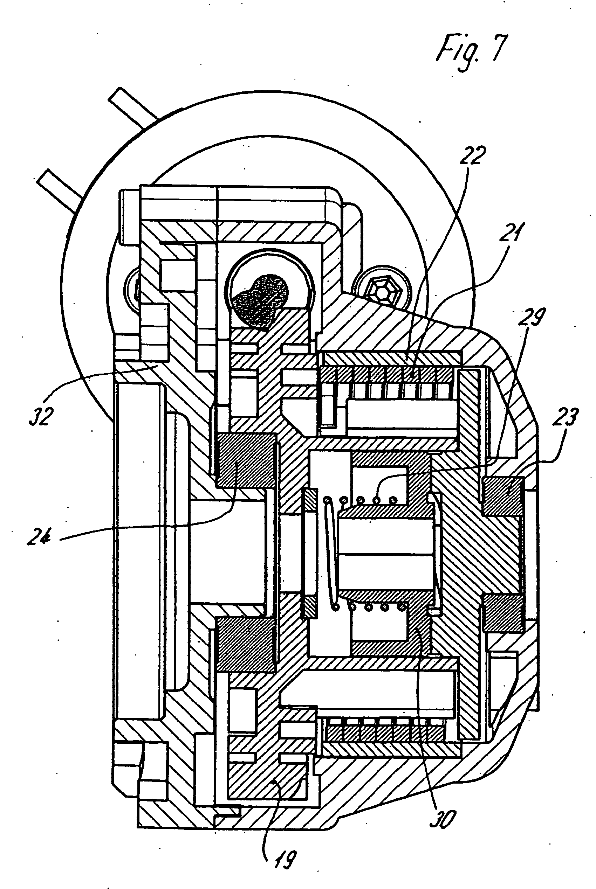

In den Figuren 2 bis 7 ist die Lastmomentsperre durch eine Bremsfeder 21 gebildet. Diese Bremsfeder 21 ist ein schraubenförmig gewundenes Federelement, welches aus einem Draht mit eckigem Querschnitt besteht. Dabei sind die Drahtenden abgewinkelt und stehen mit Klauen des Antriebskörpers und des Abtriebskörpers 34 in Wirkverbindung. Dabei ist der Antriebskörper als Schneckenrad 19 bzw. als Buchse 20 ausgebildet. Der Abtriebskörper 34 weist zwei Klauen auf, die in die Freiräume der Klauen des Schneckenrades 19 bzw. der Buchse 20 eingreifen. Die Klauen weisen in Umfangsrichtung ein Spiel auf, so dass sich beide Teile relativ zueinander um einen bestimmten Winkel gegeneinander verdrehen können. Dabei sind die Klauen und die abgewinkelten Endbereiche der Bremsfeder 21 derart gestaltet, dass die Klauen vor die abgewinkelten Endbereiche der Bremsfeder 21 vorstoßen können.

Wird nun antriebsseitig beispielsweise durch das Schneckenrad 19 ein Drehmoment erzeugt, so wird mittels der Klauen der Abtriebskörper 34 in Rotation versetzt. Dabei sind die Klauen derart geformt, dass die Reibkraft zwischen der Bremsfeder 21 und der Buchse 20 bzw. dein Profilring 31 verringert wird.

Der Abtriebskörper 34 steht in Wirkverbindung mit der Spindel 12 oder mit einer Profilstange. Wird nun abtriebsseitig ein Drehmoment beispielsweise von der Spindel 12 in den Abtriebskörper 34 eingeleitet, so wirken die Klauen des Abtriebskörpers 34 auf die abgewinkelten Endbereiche der Bremsfeder 21 derart ein, dass die Reibkraft zwischen der Bremsfeder 21 und der Buchse 20 bzw. dem Profilring 31 vergrößert wird.

An das vom Antriebsmotor 25 angetriebene Getriebe bzw. Getriebestufe kann eine Lineareinheit mit einer nicht selbsthemmenden Spin - del angekoppelt werden. Wird dann der Gabelkopf 14 manuell bewegt, wird der Freilauf betätigt, indem die Verzahnungen außer Eingriff gelangen. Man kann das Hubrohr der Lineareinheit von Hand herausziehen.

In nicht näher dargestellter Weise kann die Schnecke 18 auf die Motorwelle aufgesetzt sein. Die drehfeste Verbindung kann beispielsweise durch Verklebung oder Verpressung erfolgen. Es ist ferner möglich, dass die Motorwelle geteilt wird, wobei jedoch wiederum eine Kupplung erforderlich ist. Dies könnte beispielsweise auch durch die Schnecke 18 erfolgen. Ein Abschnitt der Motorwelle wäre dann der Schnecke 18 und der andere dem Anker des Antriebsmotors 25 zugeordnet. Die Trennung der Motorwelle könnte innerhalb oder außerhalb des Gehäuses liegen. Die Erfindung ist nicht auf die dargestellten Ausführungsbeispiele beschränkt. Wesentlich ist, dass in den das Getriebe bildenden Getriebebauteilen eine eine Lastmomentsperre bildende Bremsfeder 21 integriert ist.

### Bezugszeichen

- 10: Getriebemotor
- 11: Lineareinheit
- 12: Spindel
- 13: Hubrohr
- 14: Gabelkopf
- 15: Gabelkopf
- 16: Gehäuseteil
- 17: Gehäuseteil
- 18: Schnecke
- 19: Schneckenrad
- 20: Buchse
- 21: Bremsfeder
- 22: Buchse
- 23, 24: Wälzlager
- 25: Antriebsmotor
- 26,27: Schrauben
- 28: Klauenkupplung
- 29: Feder
- 30: Freilaufring
- 31: Profilring
- 32: Flansch
- 33: Wälzlager
- 34: Abtriebskörper

## Patentansprüche

1. Getriebemotor (10) zum Antrieb einer damit antriebstechnisch gekoppelten Verstelleinrichtung, mit:
einem Antriebsmotor (25),
mindestens einer aus Getriebebauteilen gebildeten Getriebestufe zur Reduzierung der Motordrehzahl,
einem ein- oder mehrteiligen Gehäuse (16, 17),
einer mit einer Getriebestufe in Wirkverbindung stehende, mechanische Lastmomentsperre, wobei die Lastmomentsperre ein einstückiges sowie ringförmiges Federelement (21) mit mehreren Windungen aufweist,
**dadurch gekennzeichnet, dass** die Lastmomentsperre mit einem Antriebskörper (19) der ersten, dem Antriebsmotor (25) nachgeschalteten Getriebestufe (18, 19) in Wirkverbindung steht, und
das Federelement (21) in einen Ring oder eine Buchse (22) eingesetzt ist,
und das Antriebskörper (19) mit einer profilierten Innenbohrung versehen ist,
das Gehäuse (16, 17) des Getriebemotors (10) mit mindestens einer Öffnung versehen ist, durch die eine Gewindespindel (12) oder eine Profilstange geführt ist, welche mit der profilierten Innenbohrung des Antriebskörpers (19) des Getriebemotors (10) in Wirkverbindung steht.

2. Getriebemotor nach Anspruch 1, **dadurch gekennzeichnet, dass** der Ring oder die Buchse (22) aus einem metallischen Werkstoff besteht.

3. Getriebemotor nach Anspruch 1 oder 2, **dadurch gekennzeichnet, dass** beidseitig des Antriebskörpers (19) der Getriebestufe jeweils ein Wälzlager (23, 24) im Gehäuseteil (16) angeordnet ist.

4. Getriebemotor nach einem oder mehreren der vorhergehenden Ansprüche 1 bis 3, **dadurch gekennzeichnet, dass** das Gehäuseteil (16) zur Aufnahme der Getriebebauteile mit dem Gehäuseteil (17) verschraubt ist, und dass der Antriebsmotor (25) mit dem Gehäuseteil (16) und/oder mit dem Gehäuseteil (17) verschraubt ist.

5. Getriebemotor nach einem oder mehreren der vorhergehenden Ansprüche 1 bis 4, **dadurch gekennzeichnet, dass** an das die Getriebebauteile aufnehmende Gehäuseteil (16) ein Flansch (32) festgelegt ist.

6. Getriebemotor nach einem oder mehreren der vorhergehenden Ansprüche 1 bis 5, **dadurch gekennzeichnet, dass** die aus den Getriebebauteilen gebildete Antriebsanordnung eine Klauenkupplung (28) aufweist.

7. Getriebemotor nach einem oder mehreren der vorhergehenden Ansprüche 1 bis 6, **dadurch gekennzeichnet, dass** die aus den Getriebebauteilen gebildete Getriebeanordnung einen Freilauf (30) aufweist.

8. Getriebemotor nach einem oder mehreren der vorhergehenden Ansprüche 1 bis 7, **dadurch gekennzeichnet, dass** das Gehäuse (16, 17) des Getriebemotors (10) als Formteil ausgebildet ist, wobei mehrere Formteile miteinander verbunden sind, so dass Getriebegehäuse als geschlossenes Gehäuse ausgebildet ist.

9. Getriebemotor nach einem oder mehreren der vorhergehenden Ansprüche 1 bis 8, **dadurch gekennzeichnet, dass** die Stoßflächen des Gehäuses (16, 17) Dichtelemente aufweisen.

10. Getriebemotor nach einem oder mehreren der vorhergehenden Ansprüche 1 bis 9, **dadurch gekennzeichnet, dass** das Gehäuse (16, 17) des Getriebemotors (10) mit Ansätzen und/oder Ausnehmungen versehen ist, und dass ein weiterer Antriebsstrang an den Getriebemotor (10) festlegbar ist, so dass der Getriebemotor (10) an oder in einem Möbel oder an oder in einem Möbelbauteil festlegbar ist.

11. Getriebemotor nach einem oder mehreren der vorhergehenden Ansprüche 1 bis 10, **dadurch gekennzeichnet, dass** der an dem Getriebemotor (10) angeschlossene Antriebsstrang in ein Spindeltrieb ist, der mindestens aus einer Gewindespindel, einer darauf aufgesetzten Spindelmutter und einen mit der Spindelmutter in Wirkverbindung stehenden Möbelbauteil gebildet ist.

12. Getriebemotor nach einem oder mehreren der vorhergehenden Ansprüche 1 bis 10, **dadurch gekennzeichnet, dass** die profilierte Innenbohrung als Innengewinde oder als Mehrkantprofil ausgebildet ist.

13. Getriebemotor nach einem oder mehreren der vorhergehenden Ansprüche 1 bis 12, **dadurch gekennzeichnet, dass** an das Gehäuse (16, 17) des Getriebemotors (10) Stege, Gabeln, Zapfen oder Ausnehmungen mit Querbohrungen angesetzt oder angeformt sind, so dass der Getriebemotor (10) an oder in einem Möbel oder an oder in einem Möbelbauteil festlegbar ist.

14. Getriebemotor nach einem oder mehreren der vorhergehenden Ansprüche 1 bis 13, **dadurch gekennzeichnet, dass** die Lastmomentsperre durch einen Antriebskörper (19), einen Abtriebskörper (34), einen als Federelement (21) ausgebildeten Bremskörper und einen Reibkörper (22) gebildet ist.

15. Getriebemotor nach Anspruch 14, **dadurch gekennzeichnet, dass** der Antriebskörper (19), der Abtriebskörper (34) und das Federelement (21) rotierend gelagert sind, und dass der Reibkörper (22) fest mit dem Gehäuse (16, 17) verbunden ist.

16. Getriebemotor nach einem oder mehreren der vorhergehenden Ansprüche 1 bis 15, **dadurch gekennzeichnet, dass** der Antriebskörper durch ein Schneckenrad (19), der Bremskörper durch ein Federelement (21) mit abgewinkelten Endbereichen gebildet ist, und dass der Abtriebskörper (34) mit einer Kupplung, einer Gewindespindel (12), einer Profilstange oder einem nachgeschalteten Rädergetriebe in Wirkverbindung steht.

17. Getriebemotor nach Anspruch 16, **dadurch gekennzeichnet, dass** der Außendurchmesser des Federelementes (21) ein klein wenig größer ist als der Innendurchmesser des Reibkörpers (22), so dass das Federelement (21) mit Vorspannung mit dem Reibkörper (22) zusammensetzbar ist.

18. Getriebemotor nach einem oder mehreren der vorhergehenden Ansprüche 1 bis 17, **dadurch gekennzeichnet, dass** der Antriebskörper (19) und der Abtriebskörper (34) ineinandergreifende Klauen aufweisen, die in Drehrichtung mit Spiel ineinandergreifen, so dass sich der Antriebskörper (19) und der Abtriebskörper (34) um einen bestimmten Winkel relativ zueinander bewegen können.

19. Getriebemotor nach Anspruch 18, **dadurch gekennzeichnet, dass** die Klauen des Abtriebskörpers (34) mit Flächen der abgewinkelten Endabschnitte des Bremskörpers (21) derart in Wirkverbindung stehen, dass bei einer Rotation aus der Richtung des dem Abtriebskörper (34) nachgeschalteten Abtriebsgliedes eine Verstärkung der Federvorspannung erfolgt, so dass die Reibung zwischen dem Federelement (21) und dem Reibkörper (22) erhöht ist.

20. Getriebemotor nach einem oder mehreren der vorhergehenden Ansprüche 1 bis 19, **dadurch gekennzeichnet, dass** die Kontaktflächen zwischen den Klauen des Antriebskörpers (19) und/oder des Abtriebskörpers (34) und/oder die Kontaktflächen zu den abgewinkelten Endabschnitten des Federelementes (21) als Metalleinsätze ausgebildet sind.

21. Getriebemotor nach einem oder mehreren der vorhergehenden Ansprüche 1 bis 20, **dadurch gekennzeichnet, dass** an die Getriebestufe des Getriebemotors (10) eine Lineareinheit angekoppelt ist, die eine nicht selbsthemmende Spindel aufweist.

22. Getriebemotor nach einem oder mehreren der vorhergehenden Ansprüche 1 bis 21, **dadurch gekennzeichnet, dass** eine Schnecke (18) auf die Motorwelle des Antriebsmotors (25) drehfest aufgesetzt ist, beispielsweise durch Verklebung, Verpressen und dergleichen.

23. Getriebemotor nach Anspruch 22, **dadurch gekennzeichnet, dass** die Motorwelle in zwei Abschnitte unterteilt ist, die der Schnecke (18) und dem Anker des Antriebsmotors (25) zugeordnet sind.

## Claims

1. Geared motor (10) for driving an adjusting device, which is coupled thereto in terms of drive, with:
a driving motor (25), at least one gear stage, which is formed from gear components, for reducing the motor speed, a single- or multi-part housing (16, 17), a mechanical load moment lock operatively connected to a gear stage, with the load moment lock having a single-piece and annular spring element (21) with a plurality of coils, **characterized in that** the load moment lock is operatively connected to the driving body (19) of the first gear stage (18, 19) which is connected downstream of the driving motor (25), and the spring element (21) is inserted into a ring or a bushing (22), and the driving body (19) is provided with a profiled internal bore, the housing (16, 17) of the geared motor (10) is provided with at least one opening, through which a threaded spindle (12) or a profiled rod which is operatively connected to the profiled internal bore of the driving body (19) of the geared motor (10) is guided.

2. Geared motor according to Claim 1, **characterized in that** the ring or the bushing (22) consists of a metallic material.

3. Geared motor according to Claim 1 or 2, **characterized in that** a respective rolling contact bearing (23, 24) is arranged in the housing part (16) on both sides of the driving body (19) of the gear stage.

4. Geared motor according to one or more of the preceding Claims 1 to 3, **characterized in that** the housing part (16) is screwed to the housing part (17) in order to accommodate the gear components, and **in that** the driving motor (25) is screwed to the housing part (16) and/or to the housing part (17).

5. Geared motor according to one or more of the preceding Claims 1 to 4, **characterized in that** a flange (32) is fixed to the housing part (16) which accommodates the gear components.

6. Geared motor according to one or more of the preceding Claims 1 to 5, **characterized in that** the driving arrangement formed from the gear components has a claw clutch (28).

7. Geared motor according to one or more of the preceding Claims 1 to 6, **characterized in that** the gear arrangement formed from the gear components has a free wheel (30).

8. Geared motor according to one or more of the preceding Claims 1 to 7, **characterized in that** the housing (16, 17) of the geared motor (10) is designed as a shaped part, with a plurality of shaped parts being connected to one another such that the gear housing is designed as a closed housing.

9. Geared motor according to one or more of the preceding Claims 1 to 8, **characterized in that** the abutting surfaces of the housing (16, 17) have sealing elements.

10. Geared motor according to one or more of the preceding Claims 1 to 9, **characterized in that** the housing (16, 17) of the geared motor (10) is provided with attachments and/or recesses, and **in that** a further drive train can be fixed to the geared motor (10) such that the geared motor (10) can be fixed on or in an item of furniture or on or in a furniture component.

11. Geared motor according to one or more of the preceding Claims 1 to 10, **characterized in that** the drive train which is connected to the geared motor (10) is a spindle drive which is formed from at least one threaded spindle, a spindle nut placed thereon and a furniture component operatively connected to the spindle nut.

12. Geared motor according to one or more of the preceding Claims 1 to 10, **characterized in that** the profiled internal bore is designed as an internal thread or as a polygonal profile.

13. Geared motor according to one or more of the preceding Claims 1 to 12, **characterized in that** webs, forks, journals or recesses with transverse bores are fitted to/provided on or integrally formed on the housing (16, 17) of the geared motor (10) such that the geared motor (10) can be fixed on or in an item of furniture or on or in a furniture component.

14. Geared motor according to one or more of the preceding Claims 1 to 13, **characterized in that** the load moment lock is formed by a driving body (19), an output body (34), a braking body designed as a spring element (21) and a frictional body (22).

15. Geared motor according to Claim 14, **characterized in that** the driving body (19), the output body (34) and the spring element (21) are mounted in a rotating manner, and **in that** the frictional body (22) is connected fixedly to the housing (16, 17).

16. Geared motor according to one or more of the preceding Claims 1 to 15, **characterized in that** the driving body is formed by a worm wheel (19) and the braking body is formed by a spring element (21) with angled end regions, and **in that** the output body (34) is operatively connected to a clutch, a threaded spindle (12), a profiled rod or a train of gears connected downstream.

17. Geared motor according to Claim 16, **characterized in that** the outside diameter of the spring element (21) is a little larger than the inside diameter of the frictional body (22), and therefore the spring element (21) can be fitted to the frictional body (22) with prestress.

18. Geared motor according to one or more of the preceding Claims 1 to 17, **characterized in that** the driving body (19) and the output body (34) have claws which engage in one another and engage in one another with play in the rotational direction such that the driving body (19) and the output body (34) can move relative to each other by a certain angle.

19. Geared motor according to Claim 18, **characterized in that** that the claws of the output body (34) are operatively connected to surfaces of the angled end sections of the braking body (21) in such a manner that, upon a rotation from the direction of the output element connected downstream of the output body (34), a reinforcement of the spring prestress takes place, thereby increasing the friction between the spring element (21) and the frictional body (22).

20. Geared motor according to one or more of the preceding Claims 1 to 19, **characterized in that** the contact surfaces between the claws of the driving body (19) and/or of the output body (34) and/or the contact surfaces with the angled end sections of the spring element (21) are designed as metal inserts.

21. Geared motor according to one or more of the preceding Claims 1 to 20, **characterized in that** a linear unit which has a spindle which is not self-locking is coupled to the gear stage of the geared motor (10) .

22. Geared motor according to one or more of the preceding Claims 1 to 21, **characterized in that** the worm (18) is placed onto the motor shaft of the driving motor (25) in a rotationally fixed manner, for example by adhesive bonding, pressing and the like.

23. Geared motor according to Claim 22, **characterized in that** the motor shaft is divided into two sections which are assigned to the worm (18) and the armature of the driving motor (25).

## Revendications

1. Electroréducteur (10) servant à entraîner un dispositif de réglage couplé à ce dernier selon la technique d'entraînement, comportant :
un moteur d'entraînement (25),
au moins un étage de transmission formé de composants de transmission, servant à réduire le régime moteur,
un carter (16, 17) en une partie ou en plusieurs parties,
un système de blocage d'un couple résistant mécanique, se trouvant en liaison fonctionnelle avec un étage de transmission, sachant que le système de blocage d'un couple résistant présente un élément formant ressort (21) d'un seul tenant et annulaire doté de plusieurs spires,
**caractérisé en ce que** le système de blocage d'un couple résistant se trouve en liaison fonctionnelle avec un corps d'entraînement (19) du premier étage de transmission (18, 19) disposé en aval du moteur d'entraînement (25), et
**en ce que** l'élément formant ressort (21) est inséré dans une bague ou dans une douille (22),
et **en ce que** le corps d'entraînement (19) est pourvu d'un alésage intérieur profilé, le carter (16, 17) de l'électroréducteur (10) est pourvu d'au moins une ouverture, à travers laquelle une broche filetée (12) ou une tige profilée sont guidées, lesquelles se trouvent en liaison fonctionnelle avec l'alésage intérieur profilé de l'organe de sortie (19) de l'électroréducteur (10).

2. Electroréducteur selon la revendication 1, **caractérisé en ce que** la bague ou la douille (22) sont constituées d'un matériau métallique.

3. Electroréducteur selon la revendication 1 ou 2, **caractérisé en ce que** un palier à roulement (23, 24) est disposé dans la partie de carter (16) respectivement des deux côtés du corps d'entraînement (19) de l'étage de transmission.

4. Electroréducteur selon l'une quelconque ou plusieurs des revendications précédentes 1 à 3, **caractérisé en ce que** la partie de carter (16) servant à loger les composants de transmission est vissée à la partie de carter (17), et **en ce que** le moteur d'entraînement (25) est vissé à la partie de carter (16) et/ou à la partie de carter (17).

5. Electroréducteur selon l'une quelconque ou plusieurs des revendications précédentes 1 à 4, **caractérisé en ce qu'**une bride (32) est fixée à la partie de carter (16) recevant les composants de transmission.

6. Electroréducteur selon l'une quelconque ou plusieurs des revendications précédentes 1 à 5, **caractérisé en ce que** le système d'entraînement formé à partir des composants de transmission présente un accouplement à griffes (28).

7. Electroréducteur selon l'une quelconque ou plusieurs des revendications précédentes 1 à 6, **caractérisé en ce que** l'ensemble de transmission formé à partir des composants de transmission présente une roue libre (30).

8. Electroréducteur selon l'une quelconque ou plusieurs des revendications précédentes 1 à 7, **caractérisé en ce que** le carter (16, 17) de l'électroréducteur (10) est réalisé comme une pièce moulée, sachant que plusieurs pièces moulées sont reliées entre elles de sorte que le carter de transmission est réalisé sous la forme d'un carter fermé.

9. Electroréducteur selon l'une quelconque ou plusieurs des revendications précédentes 1 à 8, **caractérisé en ce que** les surfaces d'about du carter (16, 17) présentent des joints d'étanchéité.

10. Electroréducteur selon l'une quelconque ou plusieurs des revendications précédentes 1 à 9, **caractérisé en ce que** le carter (16, 17) de l'électroréducteur (10) est pourvu de saillies et/ou d'évidements, et **en ce qu'**une chaîne cinématique supplémentaire peut être fixée sur l'électroréducteur (10) de telle sorte que l'électroréducteur (10) peut être fixé au niveau d'un meuble ou dans un meuble ou sur un élément de meuble ou dans un élément de meuble.

11. Electroréducteur selon l'une quelconque ou plusieurs des revendications précédentes 1 à 10, **caractérisé en ce que** la chaîne cinématique rattachée à l'électroréducteur (10) est une commande à broche à vis, qui est formée au moins à partir d'une broche filetée, d'un écrou de broche posé sur celle-ci et d'un élément de meuble se trouvant en liaison fonctionnelle avec l'écrou de broche.

12. Electroréducteur selon l'une quelconque ou plusieurs des revendications précédentes 1 à 10, **caractérisé en ce que** l'alésage intérieur profilé est réalisé comme un filetage intérieur ou comme un profilé à plusieurs arêtes.

13. Electroréducteur selon l'une quelconque ou plusieurs des revendications précédentes 1 à 12, **caractérisé en ce que** des traverses, des fourches, des tourillons ou des évidements dotés d'alésages transversaux sont placés ou formés sur le carter (16, 17) de l'électroréducteur (10) de sorte que l'électroréducteur (10) peut être fixé sur ou dans un meuble ou sur ou dans un élément de meuble.

14. Electroréducteur selon l'une quelconque ou plusieurs des revendications précédentes 1 à 13, **caractérisé en ce que** le système de blocage du couple résistant est formé par un corps d'entraînement (19), un corps de sortie (34), un corps de freinage réalisé comme un élément formant ressort (21) et un corps de friction (22).

15. Electroréducteur selon la revendication 14, **caractérisé en ce que** le corps d'entraînement (19), le corps de sortie (34) et l'élément formant ressort (21) sont logés en rotation, et **en ce que** le corps de friction (22) est relié de manière fixe au carter (16, 17).

16. Electroréducteur selon l'une quelconque ou plusieurs des revendications précédentes 1 à 15, **caractérisé en ce que** le corps d'entraînement est formé par une roue hélicoïdale (19), le corps de freinage est formé par un élément formant ressort (21) doté de zones d'extrémité coudées, et **en ce que** le corps de sortie (34) se trouve en liaison fonctionnelle avec un accouplement, une broche filetée (12), une tige profilée ou un train d'engrenages placé en aval.

17. Electroréducteur selon la revendication 16, **caractérisé en ce que** le diamètre extérieur de l'élément formant ressort (21) est légèrement plus grand que le diamètre intérieur du corps de friction (22) de sorte que l'élément formant ressort (21) peut être regroupé avec le corps de friction (22) sous précontrainte.

18. Electroréducteur selon l'une quelconque ou plusieurs des revendications précédentes 1 à 17, **caractérisé en ce que** le corps d'entraînement (19) et le corps de sortie (34) présentent des griffes s'enchevêtrant, lesquelles s'enchevêtrent dans la direction de rotation avec un jeu de sorte que le corps d'entraînement (19) et le corps de sortie (34) peuvent se déplacer l'un par rapport à l'autre selon un angle d'une certaine valeur.

19. Electroréducteur selon la revendication 18, **caractérisé en ce que** les griffes du corps de sortie (34) se trouvent en liaison fonctionnelle avec des faces des sections d'extrémité coudées du corps de freinage (21) de telle manière que lors d'une rotation hors de la direction de l'organe de sortie placé en aval du corps de sortie (34), un renforcement de la précontrainte du ressort se produit, de sorte que la friction entre l'élément formant ressort (21) et le corps de friction (22) est augmentée.

20. Electroréducteur selon l'une quelconque ou plusieurs des revendications précédentes 1 à 19, **caractérisé en ce que** les faces de contact entre les griffes du corps d'entraînement (19) et/ou du corps de sortie (34) et/ou les faces de contact avec les sections d'extrémité coudées de l'élément formant ressort (21) sont réalisées comme des inserts métalliques.

21. Electroréducteur selon l'une quelconque ou plusieurs des revendications précédentes 1 à 20, **caractérisé en ce qu'**une unité linéaire est accouplée à l'étage de transmission de l'électroréducteur (10), laquelle unité linéaire présente une broche non autobloquante.

22. Electroréducteur selon l'une quelconque ou plusieurs des revendications précédentes 1 à 21, **caractérisé en ce qu'**une vis sans fin (18) est placée de manière solidaire en rotation sur l'arbre de moteur du moteur d'entraînement (25), par exemple par collage, par pression ou similaire.

23. Electroréducteur selon la revendication 22, **caractérisé en ce que** l'arbre de moteur est subdivisé en deux sections, qui sont associées à la vis sans fin (18) et à l'induit du moteur d'entraînement (25).
